# EUROPÄISCHE PATENTSCHRIFT

(11) **EP 1 762 712 B1**
(45) Veröffentlichungstag und Bekanntmachung des Hinweises auf die Patenterteilung: **10.04.2013**
(21) Anmeldenummer: 06012209.0
(22) Anmeldetag: 14.06.2006
(51) Int. Cl.: F02B 37/16, F02B 39/00, F02B 29/04, F02M 25/07

(54) **Bypassventil für Verbrennungskraftmaschinen**
Bypass valve for Internal combustion engines
Soupape de dérivation pour moteurs à combustion interne

(30) Priorität: 08.09.2005 DE 102005042679
(43) Veröffentlichungstag der Anmeldung: 14.03.2007
(73) Patentinhaber: Pierburg GmbH, 41460 Neuss (DE)
(72) Erfinder: Thiery, Michael, 41564 Kaarst (DE); Rentrop, Dietmar, 40477 Düsseldorf (DE); Krause, Harald, 41515 Grevenbroich (DE)
(74) Vertreter: Patentanwälte ter Smitten Eberlein Rütten Partnerschaftsgesellschaft

(56) Entgegenhaltungen:
- DE-A1- 10 248 125
- DE-A1- 10 251 981
- DE-A1- 19 721 668
- DE-C2- 10 020 041

## Beschreibung

Die Erfindung betrifft ein Bypassventil für Verbrennungskraftmaschinen, welches einen Bypasskanal beherrscht und eine über eine Stelleinheit translatorisch bewegbare Ventileinheit aufweist, die einen Ventilschließkörper aufweist, der mit einem Ventilsitz derart korrespondiert, dass ein Bereich höheren Druckes von einem Bereich niedrigeren Druckes trennbar ist, wobei die bewegbare Ventileinheit Druckausgleichsöffnungen aufweist, über die der Bereich höheren oder niedrigeren Druckes mit zumindest einem inneren Raum des Bypassventils verbunden ist.

Derartige Bypassventile, bei denen ein Bereich höheren Druckes von einem Bereich niedrigeren Druckes durch ein Ventil trennbar und mit diesem verbindbar ist, sind beispielsweise als Schubumluftventile für Verbrennungskraftmaschinen mit Turbolader bekannt. Sie dienen zur Verbindung der Druckseite mit der Ansaugseite des Turboladers, wodurch ein Pumpen des Turboladers insbesondere beim Übergang von hoher Last in den Schubbetrieb des Verbrennungsmotors verhindert wird.

So wird in der DE 100 20 041 C2 ein Bypassventil zur Verbindung der Druckseite mit der Ansaugseite eines Turboladers beschrieben, welches eine mittels einer Antriebseinheit verschiebbare als Anker eines magnetischen Kreises ausgebildete Ventilstange aufweist, welche mit einem Ventilschließteil verbunden ist, wobei der Ventilkopf und die Ventilstange Druckausgleichsbohrungen aufweisen. Diese Druckausgleichsbohrungen dienen dazu an der bewegbaren Ventileinheit im den Bypasskanal verschließenden und freigebenden Zustand ein Kräftegleichgewicht bezüglich der auf die Ventileinheit axial wirkenden pneumatischen Drücke zu erzielen. Dazu sind jeweils Kraftangriffsflächen in inneren Räumen des Gehäuses des Ventils angeordnet, welche im wesentlichen den äußeren Kraftangriffsflächen des Ventils entsprechen, so dass durch die auf gleiche Flächen wirkenden gleichen Drücke ein Kräftegleichgewicht folgt. DE 102 48 125 A offenbart eine Druckausgleichsöffnung auf der Druckseite, um ein kräfteausgeglichenes Ventil zu erhalten.

Trotz Anordnung dieser Druckausgleichsöffnungen sind die Öffnungszeiten eines derartigen Bypassventils jedoch weiterhin zu groß. Auch die notwendige Größe der elektromagnetischen Stelleinheiten übertrifft die theoretische Größe zur Betätigung eines kraftausgeglichenen Ventils.

Daher ist es Aufgabe der Erfindung, ein Bypassventil zu schaffen, bei dem die Öffnungszeit im Vergleich zu bekannten Ventilen weiter verringert wird, wobei gleichzeitig die Größe der Stelleinheit beziehungsweise die durch die Stelleinheit aufzuwendende Kraft minimiert werden soll.

Diese Aufgabe wird dadurch gelöst, dass die Druckausgleichsöffnungen derart angeordnet oder ausgebildet sind, dass beim Öffnen des Bypassventils in den zumindest einen Raum ein im Vergleich zum im geschlossenen Zustand herrschenden Druck verringerter Druck einleitbar ist. Durch eine derartige Anordnung und Ausbildung der Druckausgleichsöffnungen wird es möglich, ein auch während des Öffnens und Schließens etwa druckausgeglichenes Ventil zu erhalten. Beim Öffnen entsteht im Spalt zwischen dem Ventilschließkörper und dem Ventilsitz durch den geringen Durchströmungsquerschnitt eine hohe Strömungsgeschwindigkeit und somit ein geringer pneumatischer Druck. Erfindungsgemäß wird nun ein ebenfalls verringerter Druck etwa gleicher Größe auf eine entgegengesetzt wirkende entsprechende Fläche im Bypassventil geleitet, so dass auch beim Öffnungs- beziehungsweise Schließvorgang ein etwa kräfteausgeglichenes Bypassventil bezüglich der pneumatischen Drücke vorliegt. Hierdurch können die Öffnungszeiten von ca. 300 bis 400 ms auf bis zu 50 ms verringert werden und somit zuverlässig ein kurzzeitiges Pumpen eines Turboladers verhindert werden.

In einer bevorzugten Ausführungsform sind die Druckausgleichsöffnungen am Ventilschließkörper im Bereich des Spaltes zwischen dem Ventilschließkörper und dem Ventilsitz angeordnet, wodurch jeweils der dort herrschende Druck in die Räume geleitet wird und an der entgegengesetzten Seite der Ventileinheit in entgegengesetzter Richtung wirkt.

Vorzugsweise sind die Druckausgleichsöffnungen durch Röhrchen gebildet, welche axial vom Ventilschließkörper in den Spalt ragen. Durch Einführen dieser Röhrchen wird der Querschnitt zwischen Verschlusskörper und Ventilsitz zusätzlich verengt, so dass sich unter der Öffnung der Röhrchen ein lokales Druckminimum ausbildet, welches über die Röhrchen auf die entgegengesetzte Seite der Ventileinheit geleitet wird, wodurch sich dort der schließend wirkende Druck deutlich verringert.

In einer alternativen Ausführungsform sind die Druckausgleichsöffnungen in Strömungsrichtung des Fluids hinter dem Spalt am Ventilschließkörper angeordnet und unmittelbar vor den Druckausgleichsöffnungen ist ein Strömungshindernis angeordnet. Durch Anordnung der Druckausgleichsöffnung unmittelbar hinter dem Spalt und gleichzeitigem Anordnen der Strömungshindernisse werden diese bei Öffnen des Ventils mit einer relativ hohen Geschwindigkeit angeströmt. Die Röhrchenöffnung selbst befindet sich im Windschatten, so dass der Druck an der Röhrchenöffnung im Vergleich zu bekannten Ausführungen abnimmt. Somit wird etwa ein Druckausgleich auch im dynamischen Zustand also beim Öffnen eines Ventils erzielt. Auch durch eine derartige Ausführung kann die Öffnungszeit auf unter 100 ms verringert werden.

In einer besonderen weiterführenden Ausführungsform sind die Druckausgleichsöffnungen durch Röhrchen gebildet, welche zumindest an einer zum Spalt weisenden Seite axial über den Ventilschließkörper in den Kanal ragen und das Strömungshindernis bilden. Durch diese Ausführung mit Röhrchen ergibt sich eine besonders einfache Ausbildung des Ventilschließkörpers, wobei die deutliche Erhöhung der Öffnungsgeschwindigkeit erhalten bleibt.

Mit diesen erfindungsgemäßen Ausführungen wird erreicht, dass die Offnungsgeschwindigkeiten eines Bypassventils deutlich erhöht werden können, wobei hierzu nur geringe Stellkräfte erforderlich sind. Somit kann beispielsweise eine elektromagnetische Stelleinheit klein ausgeführt werden. Derartige Bypassventile eignen sich somit als Schubumluftventile für Turbolader in Verbrennungskraftmaschinen, wobei ein kurzzeitiges Pumpen des Turboladers durch die kurzen Öffnungszeiten zuverlässig vermieden wird.

In den Figuren sind Ausführungsbeispiele von Bypassventilen dargestellt und werden nachfolgend beschrieben.

Figur 1 zeigt einen Ausschnitt einer Seitenansicht eines Bypassventils nach dem Stand der Technik in geschnittener Darstellung.

Figur 2 zeigt einen Ausschnitt einer Seitenansicht einer ersten erfindungsgemäßen Ausführungsform eines Bypassventils in geschnittener Darstellung.

Figur 3 zeigt eine zu Figur 2 alternative erfindungsgemäße Ausführungsform eines Bypassventils in gleicher Darstellung.

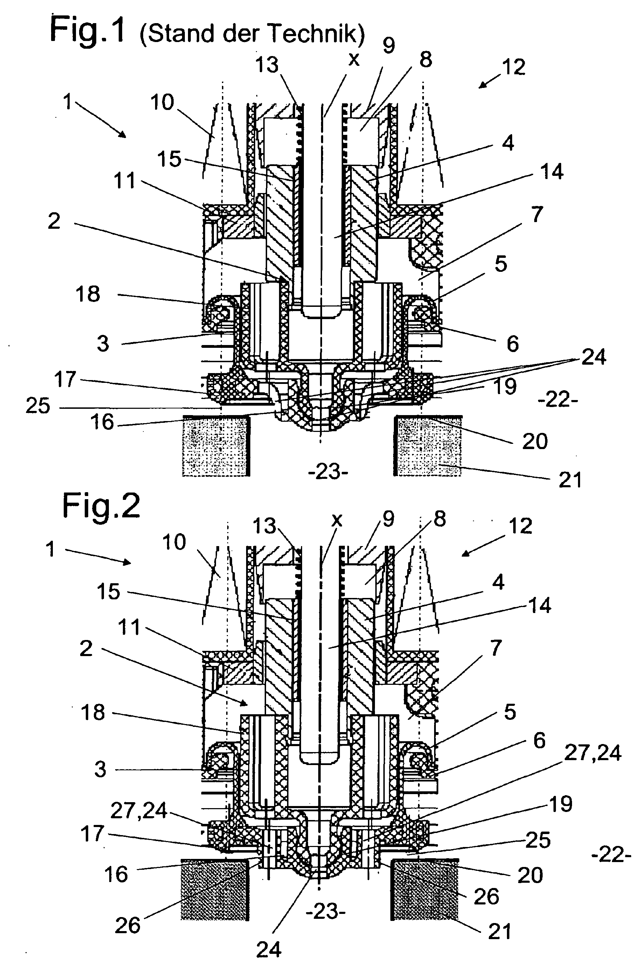

Das in Figur 1 dargestellte Bypassventil 1 dient als Schubumluftventil entsprechend des bekannten Standes der Technik. Es besteht aus einer bewegbaren Ventileinheit 2, welche im Wesentlichen aus einem Ventilschließkörper 3 und einem beweglichen Anker 4 besteht, welcher mit dem Ventilschließkörper 3 verbunden ist. Um den Ventilschließkörper 3 herum ist eine Membran 5 angeordnet, welche mit ihrem radialen Außenumfang an einem Gehäuse 6 des Bypassventils 1 befestigt ist und deren innerer radialer Umfang mit dem Ventilschließkörper 3 verbunden ist, so dass innerhalb des Gehäuses 6 ein Raum 7 ausgebildet ist. Dieser Raum 7 steht in fluidischer Verbindung zu einem Raum 8, der zwischen einem Kern 9 des Bypassventils 1 und dem Anker 4 gebildet ist. Um den Kern 9 ist eine Spule 10 zur Betätigung des Bypassventils 1 angeordnet. Die Spule 10 sowie der Kern 9 der bewegliche Anker 4 sowie ein Rückschlussblech 11 bilden einen magnetischen Kreis einer in das Bypassventil 1 integrierten Stelleinheit 12.

Gegen den Kern 9 stützt sich eine Schraubenfeder 13 ab, die um eine Ventilstange 14 angeordnet ist, welche wiederum in einer Bohrung des Kerns 9 befestigt ist. Das entgegengesetzte Ende der Feder 13 drückt gegen eine Führungshülse 15, die auf der Ventilstange 14 gleitend angeordnet ist und die vom Anker 4 umgeben ist, so dass der Anker 4 und somit die Ventileinheit 2 in Schließrichtung vorgespannt sind. Bei Betätigung der Stelleinheit 12, also bei Anlegen einer Spannung an die Spule 10, muss zur Bewegung der Ventileinheit 2 in Öffnungsrichtung die Kraft der Feder 13 überwunden werden.

Der Ventilschließkörper 3 besteht aus einem Ventilkopf 16, einer daran angebrachten Dichtlippe 17 sowie einem Verbindungselement 18, über welches der Ventilschließkörper 3 mit dem Anker 4 verbunden ist. Das Verbindungselement 18 weist einen Kugelkopf 19 auf, über welchen der Ventilkopf 16 kardanisch mit dem Verbindungselement 18 verbunden ist, so dass Ungleichmäßigkeiten und Toleranzen im Bereich eines Ventilsitzes 20 durch leichtes Kippen des Ventilkopfes 16 ausgeglichen werden können.

Der Ventilsitz 20 ist im vorliegenden Fall an einem Gehäuse 21 eines Turboladers angeordnet, der über einen Bypasskanal umgehbar ist. Wird nun die Ventileinheit 2 auf den Ventilsitz 20 abgesenkt, ist der Bypasskanal durch die Dichtlippe 17 geschlossen und somit eine Druckseite 22 des Turboladers, auf der ein höherer Druck p₂ herrscht, von seiner Saugseite 23, auf der ein niedrigerer Druck p₁ herrscht, getrennt. Zum vereinfachten Öffnen des Bypassventils 1 sind Druckausgleichsbohrungen 24 an der Ventileinheit 3 angeordnet, welche durch den Ventilkopf 16 und das Verbindungselement 18 reichen und eine fluidische Verbindung zwischen der Saugseite 23 des Turboladers und den Räumen 7 und 8 herstellen. Hierdurch entsteht bei geschlossenem Bypassventil 1 ein Kräfteausgleich an der beweglichen Ventileinheit 2, vorausgesetzt es werden gleiche wirksame Flächen, auf die die Drücke p₂ und p₁ von den jeweils entgegengesetzten Seiten wirken, geschaffen. Hierzu ist die Dichtlippe 17 in gleichem radialen Abstand zu einer Mittelachse X angeordnet wie der Außenrand der wirksamen Membranfläche. Somit greift der Druck p₁ am Ventilschließkörper 3 in Öffnungsrichtung des Ventils 1 auf einer Fläche bis zur Dichtlippe 17 an der Saugseite 23 an, während in den Räumen 7 und 8 der Druck p₁ herrscht, der entgegengesetzt also in Schließrichtung auf die Ventileinheit 2 wirkt, über die Druckausgleichsbohrungen 24 in die Räume 7 und 8 geleitet wird und dort gleiche wirksame Kraftangriffsflächen aufweist. Diese Flächen werden durch den Anker 4 und die Membrane 5 beziehungsweise das Verbindungselement 18 gebildet. Es ist somit ersichtlich, dass bei geschlossenem wie auch bei vollständig geöffnetem Bypassventil 1 ein Kräftegleichgewicht bezüglich der auf die Ventileinheit 2 direkt oder indirekt wirkenden Drücke vorhanden ist. Die Stelleinheit 12 hat somit zum Öffnen lediglich die Kraft der Feder 13 zu überwinden.

Das in Figur 2 dargestellte erfindungsgemäße Bypassventil 1 weist im Wesentlichen einen gleichen Aufbau auf, so dass die Bezugszeichen der Figur 1 für gleiche Teile übernommen werden.

Bei Betätigung eines Bypassventils 1 gemäß Figur 2 stellt sich heraus, dass beim Öffnungsvorgang des Ventils 1 etwa in der gezeichneten Stellung der bewegbaren Ventileinheit 2 ein Luftstrom durch einen Spalt 25 zwischen dem Ventilsitz 20 und dem Ventilkopf 16 strömt. Durch diese Strömung fällt in dem Spalt 25 der vorhandene Druck deutlich ab, so dass das Kräftegleichgewicht auf die Ventileinheit 2 gestört wird und eine zusätzliche Kraft in Schließrichtung auf die Ventileinheit 2 wirkt, da in den Räumen 7 und 8 weiterhin der Druck p₁ herrscht, während im Spalt 25 und somit auf den Ventilschließkörper 3 ein deutlich niedrigerer Druck p₃ durch die Strömung vorliegt. Um dies zu vermeiden, werden die Druckausgleichsöffnungen 24 so ausgeführt, dass unmittelbar in Strömungsrichtung gesehen hinter dem Spalt 25 ein Strömungshindernis 26 angeordnet ist, wodurch die Druckausgleichsöffnungen 24 anders angeströmt werden. Die Druckausgleichsöffnungen 24 liegen nun im Windschatten der durch den Spalt 25 strömenden Luftmasse. Hierdurch sinkt der Druck an den Druckausgleichsöffnungen 24 gegenüber der Ausführung gemäß der Figur 1 ab, so dass dieser Druck, der im wesentlichen dem Druck p₃ im Spalt 25 entspricht in den Raum 7 übertragen wird und eine Verringerung der wirkenden Drücke in den Räumen 7 und 8 erreicht wird.

In der dargestellten Ausführung werden die Strömungshindernisse 26 sowie die Druckausgleichsöffnungen 24 durch vier Röhrchen 27 gebildet, von denen zwei in Figur 2 zu erkennen sind. Durch eine derartige Ausführung wird ein deutlich schnelleres Öffnen des Ventils durch den auch während des Öffnens angestrebten Druckausgleich erreicht.

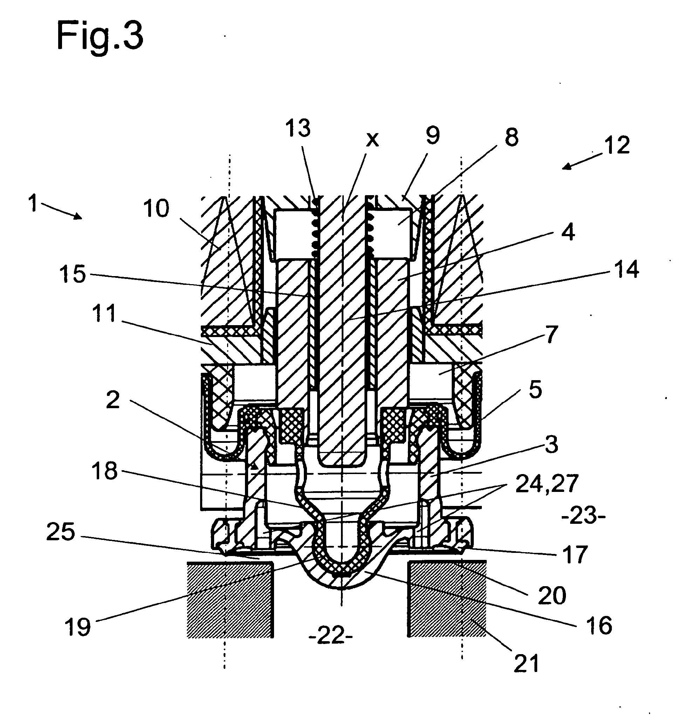

In Figur 3 ist eine hierzu alternative Ausführungsform dargestellt, die sich von der in Figur 2 dargestellten dadurch unterscheidet, dass die Druck- und die Saugseite 22, 23 im vorliegenden Ausführungsbeispiel vertauscht sind, so dass die Membran 5 zur anderen Seite gerollt ist. Des Weiteren weist diese Ausführung keine zentrale Druckausgleichsöffnung 24 am Ventilschließkörper 3 auf.

In der hier dargestellten Ausführung liegen die Druckausgleichsöffnungen 24 im Bereich des Spaltes 25, so dass der dort vorhandene Druck in das Ventilinnere beziehungsweise in die Räume 7 und 8 übertragen wird. Somit entsteht eine Druckverringerung in den Räumen 7 und 8, wodurch die Schließkraft im Ventilinneren deutlich verringert wird.

Es sollte deutlich sein, dass das Bypassventil 1 bei leichter Modifizierung in beide Richtungen zur Saug- beziehungsweise Druckseite 22, 23 angebracht werden kann, ohne dass die Funktion des Bypassventils 1 beeinträchtigt wird. Zusätzlich zu der Anordnung der Druckausgleichsöffnungen 24 direkt im Bereich des Spaltes 25 am Ventilschließkörper 3 erstrecken sich die Röhrchen 27 weiter als der übrige Ventilkopf 16 in diesem Bereich in Richtung des Ventilsitzes 20 in den Spalt 25 hinein. Hierdurch wird der Querschnitt zwischen den Röhrchen 27 und dem Ventilsitz 20 weiter verengt, so dass sich unter der Öffnung der Röhrchen 27 lokal ein Ort weiter verrringerten Druckes ausbildet. Dieser geringere Druck wird durch die Röhrchen 27 in die Räume 7, 8 geleitet, wodurch der dort bislang vorhandene schließend wirkende Druck p₂ noch deutlicher verringert wird. Somit wird durch eine derartige Ausführung beim Öffnungsvorgang die Schließkraft weiter verringert, so dass ein deutlich schnelleres Öffnen des Bypassventils 1 möglich wird.

Zusätzlich ist bei dem Ventil gemäß der Figur 3 die Ventilschließkörpergeometrie dahingehend verändert, dass der Strömung mehr Querschnitt zur Verfügung gestellt wird, wodurch sich die Geschwindigkeit im Spalt 25 verringert und somit ein etwas höherer Druck zwischen Ventilschließkörper 3 und Ventilsitz 20 herrscht als in der Ausführung gemäß Figur 2. Auch dies führt zur einer Verringerung der schließenden Wirkung des im Ventilinneren in den Räumen 7, 8 wirkenden Druckes.

Die gezeigten Ausführungen können selbstverständlich auch miteinander kombiniert werden. So können beispielsweise die Röhrchenenden gemäß einer Ausführung nach Figur 3 schräg von der Strömung abgewandt ausgeführt sein, was den Effekt eines niedrigeren in den Raum 7 geleiteten Druckes verstärken würde.

Es sollte klar sein, dass derartige Druckausgleichsöffnungen zur Herstellung eines geringeren wirksamen Druckes im Ventil auch bei anderen Ventilen, welche beispielsweise nicht elektromagnetisch betätigt werden, funktioniert, so dass Stellkräfte verringert und Öffnungszeiten minimiert werden können. Denkbar ist auch beispielsweise eine Ausführung eines solchen Bypassventils ohne Membran, wobei gleiche wirksame Kraftangriffsflächen in den Räumen 7 und 8 beziehungsweise am Ventilkopf 16 zur Kraftausgeglichenheit erhalten bleiben müssen.

## Patentansprüche

1. Bypassventil für Verbrennungskraftmaschinen, welches einen Bypasskanal beherrscht und eine über eine Stelleinheit translatorisch bewegbare Ventileinheit aufweist, die einen Ventilschließkörper aufweist, der mit einem Ventilsitz derart korrespondiert, dass ein Bereich höheren Druckes von einem Bereich niedrigeren Druckes trennbar ist, wobei die bewegbare Ventileinheit Druckausgleichsöffnungen aufweist, über die der Bereich höheren oder niedrigeren Druckes mit zumindest einem inneren Raum des Bypassventils verbunden ist, **dadurch gekennzeichnet, dass** die Druckausgleichsöffnungen (24) derart angeordnet oder ausgebildet sind, dass beim Öffnen des Bypassventils (1) in den zumindest einen Raum (7, 8) ein im Vergleich zum im geschlossenen Zustand herrschenden Druck verringerter Druck einleitbar ist.

2. Bypassventil nach Anspruch 1, **dadurch gekennzeichnet, dass** die Druckausgleichsöffnungen (24) am Ventilschließkörper (3) im Bereich des Spaltes (25) zwischen dem Ventilschließkörper (3) und dem Ventilsitz (20) angeordnet sind.

3. Bypassventil nach Anspruch 2, **dadurch gekennzeichnet, dass** die Druckausgleichsöffnungen (24) durch Röhrchen (27) gebildet sind, welche axial vom Ventilschließkörper (3) in den Spalt (25) ragen.

4. Bypassventil nach Anspruch 1, **dadurch gekennzeichnet, dass** die Druckausgleichsöffnungen (24) in Strömungsrichtung des Fluids hinter dem Spalt (25) am Ventilschließkörper (3) angeordnet sind und unmittelbar vor den Druckausgleichsöffnungen (24) ein Strömungshindernis (26) angeordnet ist.

5. Bypassventil nach Anspruch 4, **dadurch gekennzeichnet, dass** die Druckausgleichsöffnungen (24) durch Röhrchen (27) gebildet sind, welche zumindest an einer zum Spalt (25) weisenden Seite axial über den Ventilschließkörper (3) in den Bypasskanal ragen und das Strömungshindernis (26) bilden.

## Claims

1. A bypass valve for internal combustion engines that controls a bypass channel and comprises a valve unit that can be moved translationally via an actuator, wherein the valve unit comprises a valve closing body that corresponds to a valve seat so that an area of higher pressure can be separated from an area of lower pressure, wherein the movable valve unit further comprises pressure equalization openings via which the area of higher pressure or the area of lower pressure is connected to at least one inner chamber of the bypass valve, **characterized in that** the pressure equalization openings (24) are arranged or embodied so that during opening of the bypass valve (1), a pressure that is reduced in comparison with a pressure prevailing in a closed state of the bypass valve can be introduced into the at least one chamber (7, 8).

2. A bypass valve according to claim 1, **characterized in that** the pressure equalization openings (24) on the valve closing body (1) are arranged in an area of a gap (25) between the valve closing body (3) and the valve seat (20).

3. A bypass valve according to claim 2, **characterized in that** the pressure equalization openings (24) are formed by small pipes (27) that project axially from the valve closing body (3) into the gap (25).

4. A bypass valve according to claim 1, **characterized in that** the pressure equalization openings (24) are arranged behind the gap (25) at the valve closing body (3) in a flow direction of fluid, and a flow obstruction (26) is arranged immediately in front of the pressure equalization openings (24).

5. A bypass valve according to claim 4, **characterized in that** the pressure equalization openings (24) are formed by small pipes (27) that project axially via the valve closing body (3) into the bypass channel at least on a side facing the gap (25) and form the flow obstruction (26).

## Revendications

1. Soupape de dérivation pour moteurs à combustion interne, la soupape contrôlant un conduit de dérivation et comprenant un ensemble de soupape apte à être déplacé de manière translationnelle à l'aide d'un ensemble actionneur qui comprend un corps de fermeture de soupape correspondant avec une siège de soupape d'une telle manière qu'une région à pression élevée peut être séparée d'une région à pression plus faible, ledit ensemble de soupape mobil comprenant des ouvertures d'équilibrage de pression par lesquelles la région à pression élevée ou à pression plus faible est apte à être reliée à au moins un espace intérieure de ladite soupape de dérivation, **caractérisée en ce que** les ouvertures d'équilibrage de pression (24) sont arrangées ou configurée d'une telle manière qu'une pression réduite, comparée à la pression présent dans l'état fermé, peut être introduite dans ledit au moins un espace (7, 8) lors de l'ouverture de ladite soupape de dérivation (1).

2. Soupape de dérivation selon la revendication 1, **caractérisée en ce que** les ouvertures d'équilibrage de pression (24) sont disposées au corps de fermeture de soupape (3) dans la région de la fente (25) entre ledit corps de fermeture de soupape (3) et la siège de soupape (20).

3. Soupape de dérivation selon la revendication 2, **caractérisée en ce que** les ouvertures d'équilibrage de pression (24) sont formées par des tubulures (27) saillant axialement dans ladite fente (25) à partir dudit corps de fermeture de soupape (3).

4. Soupape de dérivation selon la revendication 1, **caractérisée en ce que** les ouvertures d'équilibrage de pression (24) sont disposées au corps de fermeture de soupape (3) en aval de ladite fente (25), vu dans la direction d'écoulement du fluide, et qu'un obstacle à l'écoulement (26) est disposé immédiatement avant les ouvertures d'équilibrage de pression (24).

5. Soupape de dérivation selon la revendication 4, **caractérisée en ce que** les ouvertures d'équilibrage de pression (24) sont formées par des tubulures (27) saillant, au moins sur un coté dirigé vers ladite fente (25), axialement dans ladite conduite de dérivation par ledit corps de fermeture de soupape (3), et formant ledit obstacle à l'écoulement (26).
